# EUROPEAN PATENT APPLICATION

(11) **EP 1 443 359 A1**
(43) Date of publication of application: **04.08.2004**
(21) Application number: 03001995.4
(22) Date of filing: 31.01.2003
(51) Int. Cl.: G03B 19/04, G03B 17/02

(54) **Camera device with motor drive and LC-Display in viewfinder**

(71) Applicant: Lee, James, Taoyuan City (TW)
(72) Inventor: Lee, James, Taoyuan City (TW)
(74) Representative: Panten, Kirsten

(57) **Abstract**

A camera device includes a front cover (10), a visor tube (11), a battery box (12), an optic seat (13), a shutter seat (14), a body (15), a wind canister (20), a motor (21), a middle cover (16), a gear press board (22), a count (23), a side cover (17), a back cover (18), a film guide rail seat (25), and a base pedestal (19).

## Description

The present invention relates to a camera device.

The camera is very useful for taking pictures, so that it gradually becomes a necessary article for our daily life. In practice, the camera needs to have a light weight and a miniature size. In addition, the camera needs to be operated easily and conveniently, thereby facilitating the user employing the camera.

The primary objective of the present invention is to provide a camera device that has a light weight.

Another objective of the present invention is to provide a camera device that is operated easily and conveniently.

A further objective of the present invention is to provide a camera device that has a miniature size.

In accordance with the present invention, there is provided a camera device, comprising a front cover, wherein:
the front cover is provided with an inscription, an optic dustproof, and a camera lens cover, the front cover has an inner side provided with a visor tube;
the visor tube is provided with an LCD, a flash tube, a diffuser, a CDS, and a bushing, the visor tube has a lower end provided with a battery box;
the battery box is provided with a spring, and a battery contact;
the visor tube has an inner side provided with an optic seat;
the optic seat is provided with a lens, a shutter prod, and a shutter spring, the optic seat has an inner side provided with a shutter seat;
the shutter seat is provided with a shutter spacer, an electromagnetism, an electromagnetism spring, and an electromagnetism axis, the shutter seat has an inner side provided with a body;
the body has a front portion directed toward the shutter seat and provided with connecting plates;
the body has a first side provided with a wind canister, a motor, and a middle cover;
the wind canister is provided with a press board, and an axis;
the motor is provided with a drive gear, and is fixed on a motor seat;
the middle cover is provided with a sight window cover, a sight window inscription, a power switch, a power switch connecting sheet, and a key;
the body has a second side provided with a gear press board;
between the body and a first side of the gear press board are provided a brake connection assembly, an advance commanding disk, a first gear, a poll count pusher, a second gear, a retreat gear, a third gear, a sun gear, a count splinter, a clutch positioning column, a clutch gear, and a clutch pole;
the gear press board has a second side provided with a count;
the count is provided with a count spring, and a transparent plate;
the body has a rear portion provided with and sealed by a back cover;
the back cover has a lower portion provided with a back cover switch, and a back cover spring for controlling opening and closing of the back cover, the back cover has an inner side provided with a film guide rail seat;
the film guide rail seat is provided with a film box fixing splinter, a film press board, a film press board splinter, a film window sponge, a film window, and a container splinter;
the body has an upper portion provided with a base pedestal;
the base pedestal is provided with an objective lens, an eyepiece, and an LED.

In the drawings:
Fig. 1 is an exploded perspective view of a camera device in accordance with a preferred embodiment of the present invention; and
Fig. 2 is a perspective assembly view of the camera device in accordance with the preferred embodiment of the present invention.

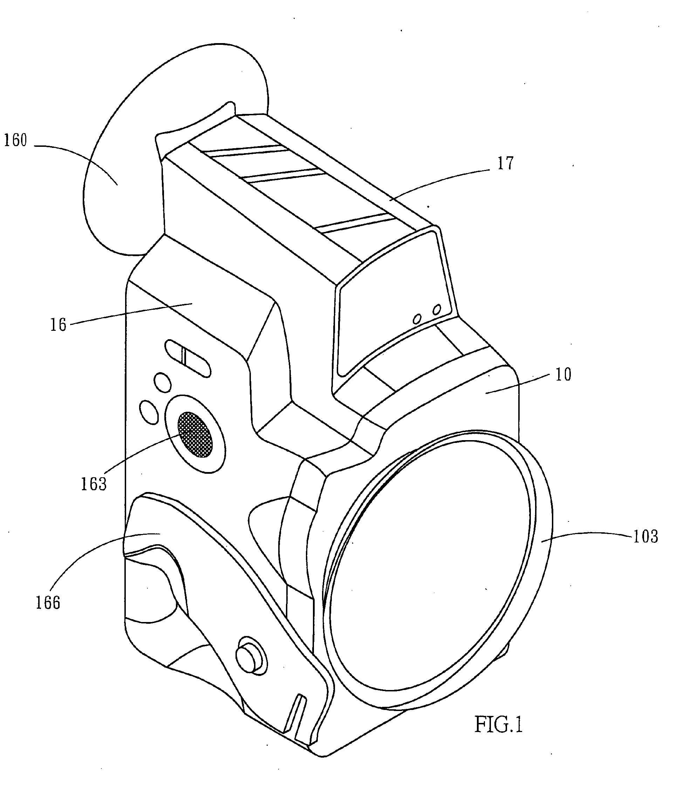

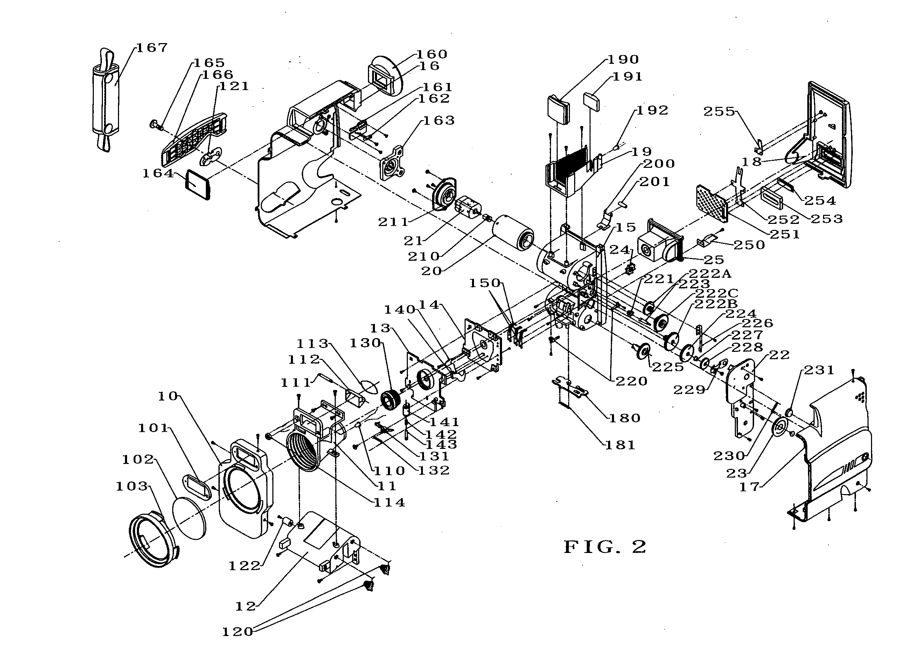

Referring to Figs. 1 and 2, a camera device in accordance with a preferred embodiment of the present invention comprises a front cover 10. The front cover 10 is provided with an inscription 101, an optic dustproof 102, and a camera lens cover 103. The front cover 10 has an inner side provided with a visor tube 11.

The visor tube 11 is provided with an LCD 110, a flash tube 111, a diffuser 112, a CDS 114, and a bushing 113. The visor tube 11 has a lower end provided with a battery box 12.

The battery box 12 is provided with a spring 120, a battery contact 121, and a buckle screw sheath 122.

The visor tube 11 has an inner side provided with an optic seat 13. The optic seat 13 is provided with a lens 130, a shutter prod 131, and a shutter spring 132.

The optic seat 13 has an inner side provided with a shutter seat 14. The shutter seat 14 is provided with a shutter spacer 140, an electromagnetism 141, an electromagnetism spring 142, and an electromagnetism axis 143.

The shutter seat 14 has an inner side provided with a body 15. The body 15 has a front portion directed toward the shutter seat 14 and provided with connecting plates 150. The body 15 has a first side provided with a wind canister 20, a motor 21, and a middle cover 16.

The wind canister 20 is provided with a press board 200, and an axis 201.

The motor 21 is provided with a drive gear 210, and is fixed on a motor seat 211.

The middle cover 16 is provided with a sight window cover 160, a sight window inscription 164, a power switch 161, a power switch connecting sheet 162, and a key 163. The middle cover 16 has an outer side provided with a buckle screw 165 for screwing and securing a buckle 166, so as to mount a flex strap 167.

The body 15 has a second side provided with a gear press board 22. Between the body 15 and a first side of the gear press board 22 are provided a brake connection assembly 220, an advance commanding disk 221, a first gear 222A, a ppll count pusher 223, a second gear 222C, a retreat gear 225, a third gear 222B, a sun gear 224, a count splinter 226, a clutch positioning column 227, a clutch gear 228, and a clutch pole 229.

The gear press board 22 has a second side provided with a count 23. The count 23 is provided with a count spring 230, and a transparent plate 231. A side cover 17 is mounted on the second side of the gear press board 22.

The body 15 is additionally provided with an octagonal gear 24.

The body 15 has a rear portion provided with and sealed by a back cover 18. The back cover 18 has a lower portion provided with a back cover switch 180, and a back cover spring 181 for controlling opening and closing of the back cover 18. The back cover 18 has an inner side provided with a film guide rail seat 25. The film guide rail seat 25 is provided with a film box fixing splinter 250, a film press board 251, a film press board splinter 252, a film window sponge 253, a film window 254, and a container splinter 255.

The body 15 has an upper portion provided with a base pedestal 19. The base pedestal 19 is provided with an objective lens 190, an eyepiece 191, and an LED 192.

## Claims

1. A camera device, comprising a front cover (10), wherein: the front cover (10) is provided with an inscription (101), an optic dustproof (102), and a camera lens cover (103), the front cover (10) has an inner side provided with a visor tube (11);
the visor tube (11) is provided with an LCD (110), a flash tube (111), a diffuser, a CDS, and a bushing (113), the visor tube (11) has a lower end provided with a battery box (12);
the battery box (12) is provided with a spring (120), and a battery contact (121); the visor tube (11) has an inner side provided with an optic seat (13); the optic seat (13) is provided with a lens (130), a shutter prod (131), and a shutter spring (132), the optic seat (13) has an inner side provided with a shutter seat (14);
the shutter seat (14) is provided with a shutter spacer (140), an electromagnetism (141), an electromagnetism spring (142), and an electromagnetism axis (143), the shutter seat (14) has an inner side provided with a body (15); the body (15) has a front portion directed toward the shutter seat (14) and provided with connecting plates (150); the body (15) has a first side provided with a wind canister (20), a motor (21), and a middle cover (16);
the wind canister (20) is provided with a press board (200), and an axis (201);
the motor (21) is provided with a drive gear (210), and is fixed on a motor seat (211); the middle cover (16) is provided with a sight window cover (160), a sight window inscription (164), a power switch (161), a power switch connecting sheet (162), and a key (163);
the body (15) has a second side provided with a gear press board (22); between the body (15) and a first side of the gear press board (22) are provided a brake connection assembly (220), an advance commanding disk (221), a first gear (222A), a poll count pusher (223), a second gear (222C), a retreat gear (225), a third gear (222B), a sun gear (224), a count splinter (226), a clutch positioning column (227), a clutch gear (228), and a clutch pole (229); the gear press board (22) has a second side provided with a count (23); the count (23) is provided with a count spring (230), and a transparent plate (231); the body (15) has a rear portion provided with and sealed by a back cover (18); the back cover (18) has a lower portion provided with a back cover switch (180) and a back cover spring (181) for controlling opening and closing of the back cover (18), the back cover (18) has an inner side provided with a film guide rail seat (25); the film guide rail seat (25) is provided with a film box fixing splinter (250), a film press board (251), a film press board splinter (252), a film window sponge (253), a film window (254), and a container splinter (255);
the body (15) has an upper portion provided with a base pedestal (19); the base pedestal (19) is provided with an objective lens (190), an eyepiece (191), and an LED (192).

2. The camera device in accordance with claim 1, wherein the battery box (12) is further provided with a buckle screw sheath (122).

3. The camera device in accordance with claim 1, wherein the middle cover (16) has an outer side provided with a buckle screw (165) for screwing and securing a buckle (166), so as to mount a flex strap (167).

4. The camera device in accordance with claim 1, further comprising a side cover (17) mounted on the second side of the gear press board (22).

5. The camera device in accordance with claim 1, wherein the body (15) is additionally provided with an octagonal gear (24).
